# EUROPÄISCHE PATENTSCHRIFT

(11) **EP 0 840 565 B1**
(45) Veröffentlichungstag und Bekanntmachung des Hinweises auf die Patenterteilung: **08.09.1999**
(21) Anmeldenummer: 96931726.2
(22) Anmeldetag: 25.07.1996
(51) Int. Cl.: A47J 41/00

(54) **VERSCHLUSSEINRICHTUNG AN BEHÄLTERN**
CLOSURE DEVICE FOR CONTAINERS
DISPOSITIF DE FERMETURE POUR RECIPIENTS

(30) Priorität: 26.07.1995 DE 29512020 U; 26.07.1995 DE 29512021 U; 26.07.1995 DE 29512022 U
(43) Veröffentlichungstag der Anmeldung: 13.05.1998
(73) Patentinhaber: H. Wilhelm Ebert GmbH & Co., 32051 Herford (DE)
(72) Erfinder: HÖRNLEIN, Reinhard, D-37603 Holzminden (DE)
(74) Vertreter: Stracke, Alexander, Dipl.-Ing.
(86) Internationale Anmeldenummer: DE9601407
(87) Internationale Veröffentlichungsnummer: WO9704695

(56) Entgegenhaltungen:
- DE-A- 3 347 713
- DE-A- 3 510 339
- DE-U- 29 504 343
- DE-U- 29 512 020
- DE-U- 29 512 021
- DE-U- 29 512 022
- US-A- 3 221 935

## Beschreibung

Die Erfindung bezieht sich auf eine Verschlußeinrichtung an Behältern für Flüssigkeiten, mit einem Verschlußelement, das mit Befestigungsmitteln an dem Behälter lösbar festlegbar ist und in einer Füllstellung eine Öffnung in das Innere des Behälters freigibt, einem am Verschlußelement vorgesehenen Verschlußkörper, der mit zugeordneten, behälterseitigen Formelementen in einer Schließstellung die Behälteröffnung dichtend abschließt, und an dem Verschlußelement lösbar angeordneten Betätigungselementen, die den Verschlußkörper aus der Schließstellung in eine Öffnungsstellung bewegen.

Es ist eine Verschlußeinrichtung dieser Art bekannt (DE-A-35 10 339), die eine Membran aufweist, die mittels eines Stempels, der über einen mittigen Druckknopf betätigt wird, in die Verschlußstellung bewegbar ist. Beim Drücken des Druckknopfes wird eine Zylinderfeder Zusammengedrückt und ein Stempelträger nach unten verschoben. Der Stempel gelangt in die Schließstellung. Beim Loslassen des Druckknopfes rückt die Zylinderfeder den Stempelträger etwas nach oben, bis die Verstellvorrichtung rastet und verharrt. Beim nächsten Herunterdrücken des Druckknopfes rastet die Verstellvorrichtung aus. Damit kann der Stempelträger nach oben gleiten. Die Membran folgt dieser Bewegung und gibt die Behälteröffnung frei.

Der Gesamtaufbau der bekannten Verschlußeinrichtung ist konstruktiv aufwendig.

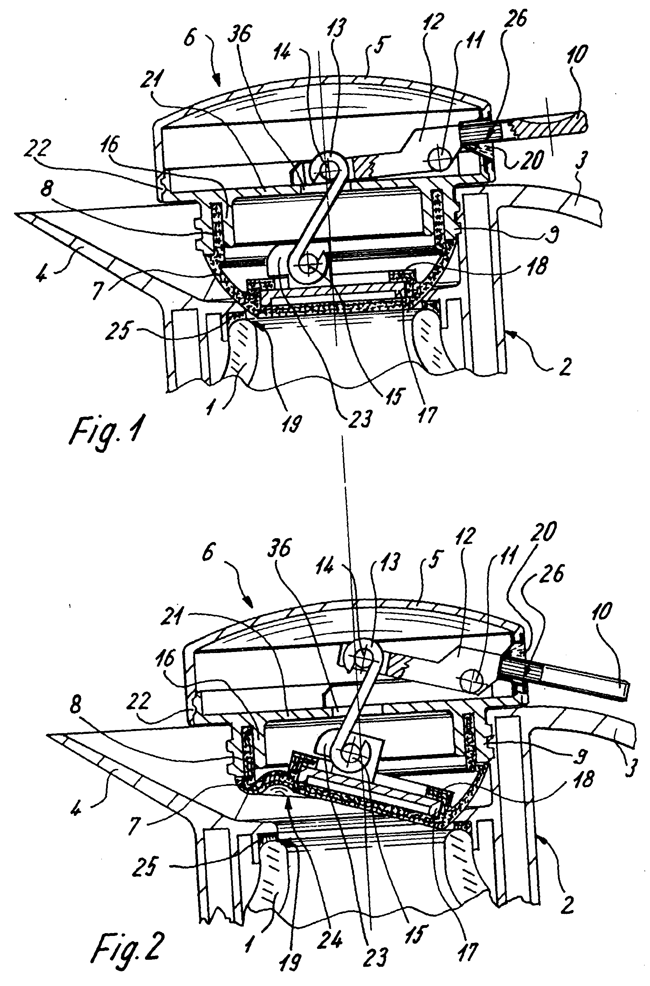

Die DE-A-33 47 713 zeigt und beschreibt zwei Ausführungsformen einer Verschlußeinrichtung, von denen die erste (Fig. 1 und 2) eine Baueinheit aus einem Stopfenoberteil und einem Stopfenunterteil aufweist. Das Stopfenunterteil ist aus elastisch verformbarem Kunststoffmaterial gefertigt und mit dünnen Wandungen ausgerüstet. Zum Schließen der Behälteröffnung wird die Baueinheit in die obere Öffnung des Behälters eingeschraubt. Das Verschließen und das Freigeben der Behälteröffnung erfolgen durch eine Schraubbewegung des Stopfens.

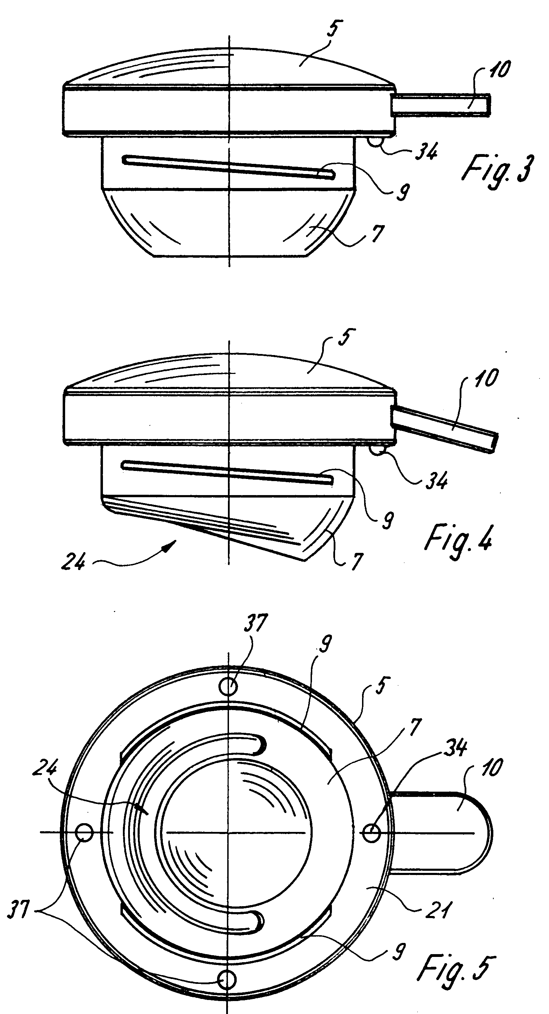

Bei der zweiten Ausführung (Fig. 3) ist der Stopfen um eine Achse schwenkbar an einem Griff gelagert. Zur Freigabe der Behälteröffnung wird somit der gesamte Stopfen aus dem oberen Bereich des Behälters herausgeschwenkt.

Der Erfindung liegt die Aufgabe zugrunde, eine Verschlußeinrichtung der eingangs genannten Art so zu gestalten, daß sie in der Konstruktion einfach ist, ihr Verschlußkörper aus der Öffnungsstellung sich selbsttätig in die Verschlußstellung bewegt und eine gleichbleibende gute Dichtwirkung gewährleistet ist.

Diese Aufgabe wird durch die Merkmale des kennzeichnenden Teils des Patentanspruches 1 in Verbindung mit den Merkmalen des Oberbegriffs gelöst.

Bei der erfindungsgemäßen Verschlußeinrichtung bildet die mittels eines Betätigungshebels in die Öffnungsstellung bewegbare Membran den Verschlußkörper, der sich nach dem Freigeben des Betätigungshebels selbsttätig in die Schließstellung bewegt, in der die Behälteröffnung flüssigkeitsdicht verschlossen ist.
Die Verschlußeinrichtung besteht nur aus wenigen Einzelteilen, so daß sich eine einfache Gesamtkonstruktion ergibt.

Weitere Merkmale der Erfindung ergeben sich aus den Unteransprüchen.

Ausführungsbeispiele der erfindungsgemäßen Verschlußeinrichtung sind in den Zeichnungen dargestellt und werden im folgenden beschrieben. Es zeigen:
- Figur 1: eine Verschlußeinrichtung sowie den oberen Teil einer Isolierkanne im Schnitt, wobei die Verschlußeinrichtung die Schließstellung einnimmt,
- Figur 2: die Verschlußeinrichtung nach der Fig. 1 in geöffneter Stellung,
- Figur 3: den Verschlußdeckel nach der Fig. 1 getrennt von der Isolierkanne,
- Figur 4: den Verschlußdeckel nach der Fig. 3 bei verschwenktem Betätigungshebel,
- Figur 5: den Verschlußdeckel nach der Fig. 4 in einer Unteransicht,
- Figur 6: einen Schnitt durch den Verschlußdeckel im Bereich des Betätigungshebels, wobei der Betätigungshebel eine Lage einnimmt, in der der Verschlußkörper sich in der Öffnungsstellung befindet, und
- Figur 7: eine weitere Ausführungsform der Verschlußeinrichtung, bei der der Betätigungshebel unmittelbar an dem Membrankörper angreift.

Die Figur 1 zeigt eine Verschlußeinrichtung 6, die zum Verschluß einer im Haushalt üblichen Isolierkanne verwendet wird, die aus einem Isoliergefäß besteht, das in einem Kannengehäuse 2 angeordnet ist und oberhalb des Isoliergefäßes 1 eine kreisförmige Ausgießöffnung aufweist, die mit der Verschlußeinrichtung 6 verschließbar ist.
An dem Kannengehäuse 2 ist eine Ausgießschnaupe zum Ableiten der aus dem Gefäß ausgegossenen Flüssigkeit angeordnet. Das Kannengehäuse 2 wird am Griff 3 gehalten.
Derartige Isolierkannen sind üblicherweise am Kannengehäuse 2 oberhalb der Ausgießöffnung des Isoliergefäßes 1 mit Befestigungseinrichtungen 9 versehen, mit denen die Verschlußeinrichtung 6 so an dem Kannengehäuse 2 festlegbar ist, daß die Ausgießöffnung im nichtbetätigten Zustand der Verschlußeinrichtung 6 sicher verschlossen ist. Diese an sich bekannten Befestigungseinrichtungen sind an dem Kannengehäuse 2 der Fig. 1 als Einschraubgewinde 9 ausgebildet, wobei jede andere Befestigungseinrichtung, wie z.B. ein Bajonettverschluß vorgesehen werden kann.
Die als eine komplette Baueinheit an dem Kannengehäuse 2 anbringbare Verschlußeinrichtung 6 wird in das kannenseitige Einschraubgewinde 9 mittels an der Verschlußeinrichtung einstückig angeordneten Gewindegängen hoher Steigung festgelegt, wobei die Lage der Gewindegänge zueinander eine genaue Drehorientierung der Verschlußeinrichtung relativ zum Kannengehäuse 2 ermöglicht.

Die Befestigungseinrichtungen 9 sind bei der Ausführung als Einschraubgewinde derart ausgelegt, daß durch die Verwendung von Trapezgewinden mit beispielsweise 30° Flankenwinkel die Verschlußeinrichtung 6 relativ zum Kannengehäuse 2 sicher zentriert wird. Hierdurch wird es vermieden, daß beispielsweise aufgrund eines Überdruckes durch heiße Flüssigkeiten innerhalb des Isoliergefäßes 1 ein langsames Austreten von unter Druck gesetzter Luft oder Flüssigkeit selber erfolgt.

Zur Festlegung der Verschlußeinrichtung 6 am Kannengehäuse 2 kann eine Rastwarze 34 so zwischen der Verschlußeinrichtung 6 und dem Kannengehäuse 2 angeordnet werden, daß in Verschlußstellung die Verschlußeinrichtung 6 rastend an dem Kannengehäuse festgelegt ist. Hierdurch wird vermieden, daß durch beispielsweise eine seitliche Betätigung des Betätigungshebels 12 die Verschlußeinrichtung 6 sich löst.

Die Verschlußeinrichtung 6 besteht aus einem Deckel 5, der topfförmig Betätigungselemente des als Membran 7 ausgebildeten Verschlußkörpers weitgehend überdeckt. Der Deckel 5 bildet mit einem Basisteil 21 eine Kammer, in der ein Drehgelenk 11 eines doppelarmigen Betätigungshebels 12 benachbart dem Außenrand der Kammer angeordnet ist. Der doppelarmige Hebel 12 weist einen Hebelarm 10 auf, der sich durch eine Kammeröffnung nach außen erstreckt.

Der Deckel 5 ist über eine Rastverbindung 22 am Basisteil 21 festgelegt. An der Unterseite des Basisteils ist eine Ringnut vorgesehen, in die ein ringförmiger Rand 8 der den Verschlußkörper bildenden Membran eingesteckt und dort festgelegt ist. Der Innenwandung der Ringnut ist das Bezugszeichen 16 zugeordnet.

Die kuppelförmig gewölbte, elastisch verformbare Membran 7 besteht vorzugsweise aus einem Gummiformteil, das auf der dem Isoliergefäß 1 zugewandten Seite eine kuppelförmige Wölbung nach außen aufweist.

Zwischen der Unterseite des Basisteils 21 sowie der Membran 7 wird eine gegenüber der Ausgießöffnung des Isoliergefäßes 1 abgedichtete Kammer gebildet, die mittels eines Durchbruchs 36 in dem Basisteil 21 mit der vom Deckel 5 und dem Basisteil gebildeten Kammer in Verbindung steht. Durch die Maße sowie die Anordnung des Einschraubgewindes 9 ist gewährleistet, daß die Membran 7 im unbetätigten Zustand so mit einer Dichtkante 19 am Isoliergefäß 1 bzw. am Kannengehäuse 2 zusammenwirkt, daß die Öffnung des Isoliergefäßes 1 dichtend gegenüber der Umgebung abgeschlossen ist.

Beim ersten Einschrauben der Verschlußeinrichtung in die Behälteröffnung erhält die unverformte Membran 7 Kontakt mit der Dichtkante 19 am Isoliergefäß 1 bzw. Kannengehäuse 2. Ein weiteres Einschrauben der Verschlußeinrichtung führt zu einer Deformierung der Membran 7 und zu einer Erhöhung der Anpreßwirkung zwischen Membran 7 und Dichtkante 19. Durch eine entsprechende Auswahl dieses Anpreßweges von Deckel 5 und Basisteil 21 und die elastische Deformierbarkeit der Membran 7 ist gewährleistet, daß eine entsprechende Vorspannung der Membran 7 gegenüber der Dichtkante 19 erzeugt wird, die eine sichere Abdichtung des Isoliergefäßes 1 durch die Membran 7 erlaubt. Hierzu wird das meist mit hoher Steigung versehene Einschraubgewinde 9 so orientiert, daß beispielsweise nach Beginn des Kontaktes zwischen Membran 7 und Dichtkante 19 noch ein Hub von ca. 1 bis 2 mm durch weiteres Verdrehen der Verschlußeinrichtung 6 erzeugt wird. Die Membran 7 wird durch diese zusätzliche Hubbewegung leicht abplattend deformiert und unter Vorspannung gesetzt.

Der Hebelarm 10 des Betätigungshebels 12 liegt unmittelbar oberhalb des Kannengriffes 3. An dem freien inneren Ende des doppelarmigen Hebelarms 12 ist ein Mitnehmerbolzen 14 für eine Hebekralle 13 vorgesehen. Diese Hebekralle 13, die an dem Mitnehmerbolzen 14 angelenkt ist, ragt durch die Öffnung 36 des Basisteils 21 und ist mit dem anderen Ende an einem Mitnehmerbolzen 15 eines Mitnehmerschuhs 23 angelenkt.

Auf der Innenseite der kuppelförmigen Wölbung der Membran 7 ist eine Haltelippe 18 vorgesehen, die einen im wesentlichen plattenförmigen, vorzugsweise kreisförmig berandeten Membranhalters 17 umgreift und diesen formschlüssig an der Membran 7 anordnet. An dem Membranhalter 17 ist der Mitnehmerschuh 23 festgelegt. Mit dem Mitnehmerbolzen 15 ist die Hebekralle 13 wiederum drehbar verbunden. Es besteht somit ein mechanischer Kontakt zwischen dem in die Haltelippe 18 der Membran 7 einsetzbaren Membranhalter 17, der Hebekralle 13 und dem Betätigungshebel 12, so daß eine Betätigung des Hebelarms 10 eine vertikale Verschiebung zumindest eines Teilbereiches der Membran 7 hervorruft.

Durch die Drehlagerung des Betätigungshebels 12 an dem Drehgelenk 11 wird beim Drücken des Hebelarms 10 die vom Hebelarm 10 abgewandte Seite des Betätigungshebels 12 im wesentlichen vertikal nach oben verschoben, wodurch der Mitnehmerbolzen 14 die drehbar mit dem Mitnehmerbolzen 14 verbundene Hebekralle 13 ebenfalls im wesentlichen nach oben verschiebt. Durch die auf der anderen Seite der Hebekralle 13 angeordnete Lagerung des Membranhalters 17 mittels des Mitnehmerbolzens 15 und der anderen Lagerung der Hebekralle 13 erfolgt ebenfalls eine vertikale Bewegung des Membranhalters 17, wobei dieser Membranhalter 17 in Abhängigkeit von dem horizontalen Abstand der beiden Mittelachsen der Mitnehmerbolzen 14 und 15 eine kombinierte Bewegung aus einer Schwenkung und einer Verschiebung vollzieht. Dies ist in der Fig. 2 dargestellt, in der die Verschlußeinrichtung 6 in einer betätigten Stellung dargestellt ist. Durch die elastische Verformung der Membran 7 aufgrund der nicht zentrischen Krafteinleitung durch Betätigung des Hebels 12 sowie der daran angeordneten Hebekralle 13 und dem Membranhalter 17 hebt die Membran 7 abschnittsweise von der Dichtungskante 19 ab, wodurch eine Ausgießöffnung 24 freigegeben wird, durch eine im dem Isoliergefäß 1 befindliche Flüssigkeit über die Ausgießschnaupe 4 ausgegossen werden kann.

Die Größe der Hubbewegung der Membran 7 zum abschnittsweisen Abheben von der Dichtungskante 19 hängt dabei von den Hebelverhältnissen an dem Betätigungshebel 12, dem vertikalen und dem horizontalen Abstand zwischen den Mitnehmerbolzen 14 und 15 ab, wobei zusätzlich für die Größe der Ausgießöffnung 24 die Abmessung der Dichtkante 19 am Isoliergefäß 1 bzw. dem Kannengehäuse 2 maßgeblich ist. Durch während der Konstruktion einer erfindungsgemäßen Verschlußeinrichtung vornehmbare Variation dieser Einflußparameter ist eine in Abhängigkeit von einem ergonomisch günstigen Betätigungsweg des Hebelarms 10 am Hebel 12 unterschiedlich große Ausgießöffnung 24 erreichbar.

In besonders vorteilhafter Weise erfüllt die erfindungsgemäße Verschlußeinrichtung alle Anforderungen, die sich bei diesem Einsatzfall an Isoliergefäßen aus dem täglichen Gebrauch derartiger Gefäße ergeben. Die Verschlußeinrichtung 6 bildet eine komplette Baueinheit, die als solche ebenfalls vollständig von dem Isoliergefäß 1 bzw. dem Kannengehäuse 2 abnehmbar und getrennt reinigbar ist, wobei durch das Einstecken des ringförmigen Randes 8 des Membrankörpers in das Basisteil 21 eine gute Abdichtung gegen das Eindringen von Flüssigkeiten, beispielsweise nach einem Ausgießvorgang, in das Innere der Verschlußeinrichtung 6 sich ergibt. Die passend zum ringförmigen Rand 8 ausgebildete Ringnut in dem Basisteil 21 wird gebildet aus der ringförmigen Wandung 16 und der Außenwandung, die mit dem Einschraubgewinde 9 versehen ist. Die Membran wird durch einen außen umlaufenden Ansatz in ihrer Einstecktiefe festgelegt. Durch eine entsprechende Tolerierung der Abmessungen der Einstecköffnung und durch die Flexibilität des vorteilhafterweise als Gummiformteil ausgebildeten Membrankörpers ist eine hohe Abdichtwirkung gegeben. An dieser Aufnahme der als Gummiformteil ausgebildeten Membran 7 können darüber hinaus weitere Dichtungsmaßnahmen vorgesehen werden, die beispielsweise in der Anordnung zusätzlicher Dichtlippen bestehen können.

Um ein seitliches Ausweichen des Betätigungshebels 12 durch nicht exakt vertikale Betätigung des Hebelarms 10 zu verhindern, werden in nicht näher dargestellter Weise seitlich an dem Betätigungsehebel 12 Stege 35 angeordnet, die eine sichere seitliche Führung des Betätigungshebels beispielsweise bei Betätigung und auch beim Aufschrauben der Verschlußeinrichtung 6 auf das Kannengehäuse 2 zulassen. Es kann somit durch eine unsachgemäße Betätigung des Hebelarms 10 kein Verschieben der Hebelelemente erfolgen.

Zwischen dem Mebranhalter 17 und der Membran 7 wird beispielsweise durch Auflagekanten oder Abstandshalter ein Hohlraum gebildet, der ähnlich wie bei einer Isolierverglasung ein Luftpolster zwischen Membran 7 und Membranhalter 17 bildet, wodurch der Wärmedurchgangskoeffizient in diesem Bereich der Verschlußeinrichtung 6 deutlich verringert wird.

Es kann aber beispielsweise auch dafür gesorgt werden, daß die Membran 7 leichtgängig in der nutenförmigen Einstecköffnung verdrehbar ist, wodurch in besonders vorteilhafter Weise dafür gesorgt werden kann, daß beim Aufschrauben der Verschlußeinrichtung 6 auf das Kannengehäuse 2 kein punktueller Verschleiß der Membran 7 auftritt. Nach dem Berühren von Membran 7 und Dichtkante 19 beim Einschrauben der Verschlußeinrichtung 6 in das Gewinde 9 des Kannengehäuses 2 wird aufgrund der hohen Reibbeiwerte eines Gummiformteils die Membran 7 einen sehr reibbehafteten Kontakt zur Dichtkante 19 aufbauen. Eine weitere Verdrehung des Deckels 5 bis zu einem vorgegebenen Anschlag ruft nur eine unwesentliche Verdrehung zwischen Membran 7 und Dichtkante 19 hervor. Um dadurch keine Torsionsbelastung der Membran 7 zuzulassen, kann beispielsweise durch geschickte Materialkombination im Bereich der Ringnut für den Rand 8 dafür gesorgt werden, daß hier eine Relativverdrehung zwischen Basisteil 21 und Membran 7 leichtgängig möglich ist. Hierdurch wird die Membran nicht tordiert und damit auch nicht unzulässige verformt, wodurch in der Summe ansonsten Rißbildungen auftreten könnten. In einer weiteren, nicht dargestellten Ausführungsform, können zur Gewährleistung einer guten Relativbewegung zwischen Membran 7 und Basisteil 21 in dieser Einstecköffnung separate, mit besonders geringen Reibbeiwerten ausgestattete Druckringe eingelegt werden, die eine mechanische Entkopplung zwischen Basisteil 21 und Membran 7 hervorrufen.

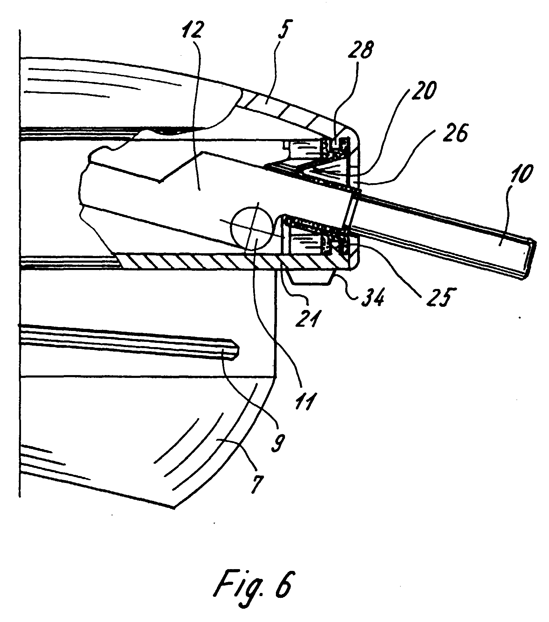

In den Figuren 3 und 4 ist für die Verschlußeinrichtung als komplette Baueinheit unter Weglassung der kannenseitigen Bauelemente die Schließstellung sowie die Öffnungsstellung dargestellt. In der Schließstellung gemäß Fig. 3 ist die Membran 7 kreissymmetrisch unverformt angeordnet, wobei durch das Aufpressen auf die Dichtkante 19 eine leichte vertikale Stauchung dieser Membran 7 im Bereich der Dichtkante 19 erfolgt. Wird der Hebelarm 10 vertikal nach unten gedrückt, so wird durch die Hebelmechanik, gebildet aus dem Betätigungsehebel 12, der Hebekralle 13 sowie dem Membranhalter 17 die Membran 7 verformt. Diese Verformung erfolgt um so stärker entlang eines Abschnittes der Dichtkante 19 je größer der horizontale Abstand zwischen den Mitnehmerbolzen 14 und 15 am Hebel 12 bzw. Membranhalter 17 ist. Es erfolgt quasi ein Abkippen des schnaupenseitig angeordneten Abschnittes der Membran 7, wobei in einer Ansicht gemäß Fig. 5 sich eine bestimmte Ausformung der Membran 7 im Bereich der Ausgießöffnung 24 bildet. Die Membran 7 verformt sich in diesem Bereich nicht nur punktuell, sondern durch die kreisförmige Berandung des Membranhalters 17 und die Ausbildung einer Haltelippe 18 entlang eines halbkreisförmigen Abschnittes, wie man dies aus der Fig. 5 unter Zuhilfenahme der Fig. 2 erkennen kann. Es bildet sich eine halbkreisförmige, nutförmige Vertiefung in der Membran 7, die zu einem lokalen Umstülpen der Membran 7 in das Innere der ursprünglich kuppelförmigen Membran 7 führt. Dieses Umstülpen hat den besonderen Vorteil, daß es als Beulverformung zweiter Ordnung zu einer Verringerung der für die Aufrechterhaltung einer Ausgießöffnung 24 notwendigen Kraft beiträgt. Auch ist durch die vorstehend beschriebene Ausformung der Ausgießöffnung 24 eine besonders gute Flüssigkeitsleitung der aus dem Isoliergefäß 1 auszugießenden Flüssigkeit gegeben.

Die halbkreisförmige, nutförmige Vertiefung in der Membran 7 dient weiterhin dazu, beim Ausgießen von z.B. Flüssigkeit aus dem Isoliergefäß 1 nach Nachströmen von Luft in das Innere des Isoliergefäßes zu unterstützen, da die Luft seitlich an dem Flüssigkeitsstrahl vorbei in das Innere des Isoliergefäßes eintreten kann.

In der Fig. 6 ist in einer vergrößerten Ausbruchdarstellung noch einmal eine Möglichkeit angegeben, wie der Betätigungshebel 12 in dem Verbund aus Deckel 5 und Basisteil 21 gelagert und gegenüber Feuchtigkeitseintritt von außen abgedichtet ist. Hierzu wird vor dem Einstecken des Betätigungshebels 12 eine Hebeldichtung 20 auf die Betätigungsseite 10 des Hebels aufgesteckt, die diesen Betätigungshebel 10 manschettenförmig umgreift und mit umlaufenden Einstecknuten 28 in dazu passende Abstätze von Deckel 5 und Basisteil 21 eingreift. Durch diese an sich bekannte manschettenförmige Abdichtung ist der Deckel 5 der Verschlußeinrichtung gegen Flüssigkeitseintritt, beispielsweise beim Reinigen, ausreichend abgedichtet.

Beispielsweise kann als zusätzliche Dichtnahmenahme die Durchstecköffnung 26 des Basisteiles 21 abgedichtet sein, in dem ein an sich bekannter Faltenbalg o.dgl. zwischen Basisteil 21 und Betätigungshebel 12 dichtend angeordnet ist. Hierdurch wird ein Durchlaufen von trotz der Dichtungsmaßnahmen am Betätigungshebel 12 in den Deckel 5 eingedrungener Flüssigkeit an einem Durchtreten in das Innere der kuppelförmigen Membran 7 verhindert.

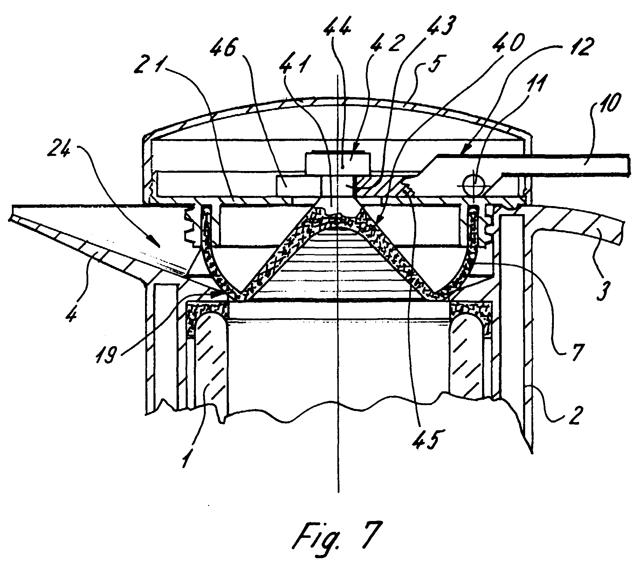

Bei dem Ausführungsbeispiel nach der Fig. 7 weist die Membran 7 im Bereich des konkav gekrümmten Innenbereiches der kuppelförmigen Wölbung einen vorzugsweise kegelförmigen Wandungsbereich 40 auf, dessen Spitze 41 benachbart dem Betätigungshebel 12 liegt. An der Spitze 41 des Membrankegels 40 ist ein Formelement 42 vorgesehen, das sich aus einem zylindrischen Zapfen 43 und einer Endscheibe 44 zusammensetzt.

Der Hebelarm 45 des Betätigungsehebels 12 weist an seinem freien Ende eine Gabel 46 auf, die den zylindrischen Zapfen 40 an zwei Seiten umgreift. Die Endscheibe 44, deren Durchmesser größer ist als der des Zapfens 43 wird von der Gabel 46 untergriffen, wobei die Endscheibe in ihrem Bereich die Gabelöffnung abdeckt.

Aus der Fig. 7 ergibt sich, daß die Wandungsdicke des Membrankegels 40 in Richtung zur Spitze 41 bzw. zum Formelement 42 hin zunimmt.

Bei der Öffnungsbewegung, die durch Betätigung des Hebelarms 10 vorgenommen wird, werden über den Membrankegel 40 im wesentlichen Zugkräfte auf die Dichtungsbereiche 19 der Membran 7 ausgübt, die zu wesentlichen Verformungen nur in diesen Dichtungsbereichen 19 führen und die Behälteröffnung freigeben.

Selbstverständlich sind weitere Formgebungen für die hier als vorzugsweise kegelförmig bezeichneten Bereiche der Membran denkbar, wobei insbesondere auf die Formgebung der Membran 7 bei ihrer Herstellung Rücksicht genommen werden muß.

Der Membrankegel 40 bildet zur Öffnung des Isoliergefäßes 1 einen geöffneten Raum, durch den das Ausflußverhalten der Flüssigkeit des Isoliergefäßes beim Ausgießen verbessert wird.

Aus der Fig. 7 ergibt sich, daß sich das aus dem Zapfen 43 und aus der Endscheibe 44 gebildete Formelement 42 in der Kammer zwischen dem Deckel 5 und dem Basisteil 21 angeordnet ist und die Spitze 41 des Membrankegels 40 sich durch die mittige Öffnung des Basisteils 21 erstreckt.

## Patentansprüche

1. Verschlußeinrichtung an Behältern für Flüssigkeiten, mit
- einem Verschlußelement (6), das mit Befestigungsmitteln (9) an dem Behälter lösbar festlegbar ist und in einer Füllstellung eine Öffnung in das Innere des Behälters freigibt,
- einem am Verschlußelement (6) angeordneten Verschlußkörper (7), der mit zugehörigen behälterseitigen Formelementen (19) in einer Schließstellung die Behälteröffnung dichtend abschließt,
- an dem Verschlußelement (6) lösbar angeordneten Betätigungselementen, die den Verschlußkörper (7) aus der Schließstellung in eine Öffnungsstellung bewegen,
**dadurch gekennzeichnet, daß**
das Verschlußelement (6) als Baueinheit aus einem Deckel (5), einem mit dem Deckel (5) verbundenen Basisteil (21) und einer an dem Basisteil (21) festgelegten, kuppelförmig gewölbten, den Verschlußkörper bildenden, elastisch verformbaren Membran (7) ausgeführt ist, wobei die Membran (7) mit einem ringförmigen Rand (8) in eine Ringnut des Basisteils (21) eingesteckt und festgelegt ist, und wobei in einer von dem Deckel (5) und dem Basisteil (21) begrenzten Kammer ein Drehgelenk (11) eines doppelarmigen Betätigungshebels (12) benachbart dem Außenrand der Kammer angeordnet ist, der mit einem Hebelarm unmittelbar oder mittelbar über ein Getriebeteil lösbar mit der Membran (7) verbunden ist, und dessen anderer Hebelarm (10) sich durch eine Kammeröffnung nach außen erstreckt, wobei die Membran (7) nach Festlegen des Deckels (5) an der Behälteröffnung an zumindest eine umlaufende Dichtungskante der zugehörigen behälterseitigen Formelemente (19) angepreßt und zum Öffnen durch Betätigen des Hebelarms (10) so elastisch verformbar ist, daß sie abschnittsweise oder vollständig von der Dichtungskante abhebbar ist und sich nach dem Freigeben des Hebelarms (10) selbsttätig wieder in die Schließstellung zurückbewegt.

2. Verschlußeinrichtung nach Anspruch 1, dadurch gekennzeichnet, daß das Verschlußelement (6) und Befestigungsmittel (9) an der Behälteröffnung so zusammenwirken, daß die elastisch verformbare Membran (7) nach dem Festlegen des Verschlußelementes (6) an der Behälteröffnung unter Vorspannung dichtend an die zugehörigen behälterseitigen Formelemente (19) angepreßt ist.

3. Verschlußeinrichtung nach Anspruch 1, dadurch gekennzeichnet, daß die Membran (7) beim Abheben von den behälterseitigen Formelementen (19) durch die Betätigungseinrichtungen (12,13,17) so weit verformbar ist, daß sie zumindest an dem von der Dichtkante (19) abgehobenen Teilbereich in ihr ursprünglich kuppelförmiges Inneres umstülpt.

4. Verschlußeinrichtung nach Anspruch 1, dadurch gekennzeichnet, daß die Membran (7) derart an dem Verschlußelement (6) angeordnet und abgedichtet ist, daß ein Flüssigkeitsdurchtritt in das Innere der kuppelförmigen Membran (7) nicht möglich ist.

5. Verschlußeinrichtung nach einem der vorhergehenden Ansprüche, dadurch gekennzeichnet, daß die Membran (7) als Gummiformteil ausgebildet ist.

6. Verschlußeinrichtung nach Anspruch 1, dadurch gekennzeichnet, daß die Verformung der Membran (7) unmittelbar an einer zum Abführen der Flüssigkeit dienenden Leiteinrichtung erfolgt.

7. Verschlußeinrichtung nach Anspruch 1, dadurch gekennzeichnet, daß die Festlegung des Betätigungshebels (12) an der Membran (7) so ausgeführt ist, daß die Verformung der Membran bei Betätigung des Hebels (12) nur abschnittsweise erfolgt.

8. Verschlußeinrichtung nach einem der vorhergehenden Ansprüche, dadurch gekennzeichnet, daß die kuppelförmige Membran (7) auf der Innenseite eine umlaufende Haltelippe (18) aufweist, die über einen dazu passenden Teil der Betätigungseinrichtungen (17) stülpbar ist.

9. Verschlußeinrichtung nach Anspruch 1, dadurch gekennzeichnet, daß der Betätigungsehebel (12) an der Austrittsstelle (26) der von dem Deckel (5) und dem Basisteil (21) begrenzten Kammer gegenüber der Umgebung abdichtbar ist.

10. Verschlußeinrichtung nach Anspruch 2, dadurch gekennzeichnet, daß als Befestigungsmittel (9) des Behälterverschlusses an dem Behälter ein Bajonettverschluß vorgesehen ist.

11. Verschlußeinrichtung nach Anspruch 1, dadurch gekennzeichnet, daß die Membran (7) einen kegelförmigen, zur Deckelseite sich verjüngenden, zur Behälteröffnung des Isoliergefäßes geöffneten Raum bildet.

12. Verschlußeinrichtung nach Anspruch 11, dadurch gekennzeichnet, daß an der deckelseitigen Spitze (41) des Membrankegels (40) ein Formelement (42) vorgesehen ist, das mit einem Hebelarm (45) des doppelarmigen Betätigungshebels (12) koppelbar ist.

13. Verschlußeinrichtung nach Anspruch 12, dadurch gekennzeichnet, daß die mit dem Formelement (42) ausgerüstete Spitze des Membrankegels (40) sich durch eine Öffnung des Basisteils (21) erstreckt.

14. Verschlußeinrichtung nach einem der Ansprüche 12 oder 13, dadurch gekennzeichnet, daß das Formelement (42) aus einem zylindrischen Zapfen (43) und einer Endscheibe (44) besteht.

15. Verschlußeinrichtung nach Anspruch 14, dadurch gekennzeichnet, daß der Hebelarm (45) des Betätigungshebels (12) eine Gabel (46) aufweist, die den zylindrischen Zapfen (40) des Formelements (42) zweiseitig umgreift und die Endscheibe (44), deren Durchmesser größer ist als der des Zapfens (43), untergreift.

16. Verschlußeinrichtung nach einem der Ansprüche 12 bis 15, dadurch gekennzeichnet, daß die Wanddicke des Membrankegels (40) zum Formelement (42) hin zunimmt.

## Claims

1. Closure device on containers for liquids, having
- a closure element (6) which can be mounted detachably to the container with attachment means (9) and unblocks an opening into the interior of the container in a filling position,
- a closure body (7), which tightly seals off the container opening in a closed position with associated form elements (19) on the container side, arranged on the closure element (6),
- actuation elements arranged on the closure element (6), which move the closure body (7) from the closed position into an opening position,
characterised in that the closure element (6) is designed as a structural unit comprising a base component (21) attached to the lid (5) and a dome-shaped and vaulted, elastically deformable membrane (7) forming the closure body and attached to the base component (21), whereby the membrane (7) having an annular edge (8) is inserted into an annular groove of the base component (21) and fixed there, and whereby in a chamber delimited by the lid (5) and the base component (21) a hinge joint (11) of a double-arm actuation lever (12) is arranged adjacent to the outer edge of the chamber, which, with one lever arm, is connected detachably to the membrane (7) directly or indirectly by means of a driving gear and whose other lever arm (10) extends outwards through a chamber opening, whereby the membrane (7) is pressed onto at least one circular sealing edge of the associated form elements (19) on the container side after setting of the lid (5) on the container opening, and can be deformed elastically for opening through actuation of the lever arm (10) such that it can be raised partly or completely from the sealing edge and is retracted automatically into the closed position after release of the lever arm (10).

2. Closure device as claimed in Claim 1, characterised in that the closure element (6) and attachment means (9) cooperate on the container opening in such a way that the elastically deformable membrane (7) is pressed tight and under initial tension onto the associated form elements (19) on the container side after fixing of the closure element (6) on the container opening.

3. Closure device as claimed in Claim 1, characterised in that the membrane (7), when lifted from the form elements (19) by means of the actuation devices (12, 13, 17), can be deformed to the extent where it turns up at least in the subarea raised from the sealing edge (19) into its originally dome-shaped interior.

4. Closure device as claimed in Claim 1, characterised in that the membrane (7) is arranged and sealed on the closure element (6) such that liquid cannot penetrate into the interior of the dome-shaped membrane (7).

5. Closure device as claimed in any one of the foregoing claims, characterised in that the membrane (7) is designed as a shaped rubber component.

6. Closure device as claimed in Claim 1, characterised in that the membrane (7) deforms directly on a guide device serving to drain off liquid.

7. Closure device as claimed in Claim 1, characterised in that the actuation lever (12) is attached to the membrane (7) such that said membrane is only partially deformed when said lever (12) is actuated.

8. Closure device as claimed in any one of the foregoing claims, characterised in that the dome-shaped membrane (7) exhibits on its inner side a circular stop lip (18) which can be turned up by means of a matching section of the actuation devices (17).

9. Closure device as claimed in Claim 1, characterised in that the actuation lever (12) at the outlet point (26) of the chamber delimited by the lid (5) and the base component (21) can be sealed off from the atmosphere.

10. Closure device as claimed in Claim 2, characterised in that a bayonet closure is provided as attachment means of the container closure on the container.

11. Closure device as claimed in Claim 1, characterised in that the membrane (7) forms a wedge-shaped space tapering to the lid side and open to the container opening of the insulating tank.

12. Closure device as claimed in Claim 11, characterised in that provided on the apex (41) of the membrane wedge (4) is a form element (42) which can be coupled with a lever arm (45) of the double-arm actuation lever (12).

13. Closure device as claimed in Claim 12, characterised in that the tip of the membrane wedge (4) equipped with the form element (42) extends through an opening of the base component (21).

14. Closure device as claimed in either of Claims 12 and 13, characterised in that the form element (42) comprises a cylindrical trunnion and an end plate (44).

15. Closure device as claimed in Claim 14, characterised in that the lever arm (45) of the actuation lever (12) exhibits a fork (46) which encompasses the cylindrical trunnion (40) of the form element (42) and grips the end plate (44) whose diameter is greater than that of the trunnion (43).

16. Closure device as claimed in any one of Claims 12 to 15, characterised in that the wall thickness of the membrane wedge (4) widens out to the form element (42)

## Revendications

1. Dispositif de fermeture pour des récipients destinés à contenir des liquides, avec :
- un élément de fermeture (6) qui peut être fixé de manière amovible sur le récipient avec des moyens de fixation (9) et qui dégage une ouverture donnant vers l'intérieur du récipient lorsqu'il est en position ouverte,
- un obturateur (7) disposé sur l'élément de fermeture (6), qui ferme de manière étanche l'ouverture du récipient avec les éléments de forme (19) correspondants du récipient lorsqu'il est en position fermée,
- des éléments d'actionnement disposés de manière amovible sur l'élément de fermeture (6), qui déplacent l'obturateur (7) de la position fermée à une position ouverte,
caractérisé en ce que l'élément de fermeture (6) est formé d'un couvercle (5), d'une partie de base (21) reliée avec le couvercle (5) et d'une membrane (7) fixée à la partie de base (21), arrondie en coupole et déformable de façon élastique qui forme l'obturateur, la membrane (7) étant enfoncée et fixée par un bord annulaire (8) dans une gorge annulaire de la partie de base (21), et dans lequel une articulation pivotante (11) d'un levier d'actionnement (12) à deux bras est disposée dans une chambre délimitée par le couvercle (5) et la partie de base (21) à proximité du bord extérieur de la chambre, ce levier d'actionnement étant relié de manière amovible à la membrane (7) par un bras de levier, directement et indirectement par l'intermédiaire d'une partie d'engrenage, et son autre bras de levier (10) s'étendant vers l'extérieur à travers une ouverture de la chambre, la membrane (7) étant pressée sur au moins un bord d'étanchéité continu de l'élément de forme (19) correspondant du récipient lorsque le couvercle (5) est posé sur l'ouverture du récipient et pouvant être déformée de manière élastique par l'actionnement du bras de levier (10) en vue de l'ouverture de telle sorte qu'elle puisse être soulevée en partie ou entièrement du bord d'étanchéité et revienne d'elle-même dans la position fermée lorsque le bras de levier (10) est relâché.

2. Dispositif de fermeture selon la revendication 1, caractérisé en ce que l'élément de fermeture (6) et les moyens de fixation (9) coopèrent au niveau de l'ouverture du récipient de telle sorte que la membrane (7) déformable de manière élastique soit pressée de manière étanche sous précontrainte contre les éléments de forme (19) correspondants du récipient après la fixation de l'élément de fermeture (6).

3. Dispositif de fermeture selon la revendication 1, caractérisé en ce que la membrane (7) peut être déformée, lorsqu'elle est soulevée des éléments de forme (19) du récipient par les dispositifs d'actionnement (12, 13, 17) jusqu'à ce qu'elle se retourne dans son intérieur initialement en forme de coupole au moins dans la partie qui s'est soulevée du bord d'étanchéité (19).

4. Dispositif de fermeture selon la revendication 1, caractérisé en ce que la membrane (7) est disposée et étanche sur l'élément de fermeture (6) de telle sorte que la pénétration de liquide à l'intérieur de la membrane (7) en forme de coupole n'est pas possible.

5. Dispositif de fermeture selon l'une quelconque des revendications précédentes, caractérisé en ce que la membrane (7) est une pièce moulée en caoutchouc.

6. Dispositif de fermeture selon la revendication 1, caractérisée en ce que la déformation de la membrane (7) a lieu directement au niveau d'un dispositif de guidage servant à l'évacuation du liquide.

7. Dispositif de fermeture selon la revendication 1, caractérisé en ce que la fixation du levier d'actionnement (12) sur la membrane (7) est réalisée de telle sorte que la déformation de la membrane ne se fasse que progressivement lors de l'actionnement du levier (12).

8. Dispositif de fermeture selon l'une quelconque des revendications précédentes, caractérisé en ce que la membrane (7) en forme de coupole présente sur sa face intérieure une lèvre de maintien (18) continue qui peut être retournée par une partie adaptée des dispositifs d'actionnement (17).

9. Dispositif de fermeture selon la revendication 1, caractérisé en ce que le levier d'actionnement (12) peut être isolé de l'environnement au point de sortie (26) de la chambre délimitée par le couvercle (5) et la partie de base (21).

10. Dispositif de fermeture selon la revendication 2, caractérisé en ce que les moyens de fixation (9) de l'obturateur du récipient sont formés par une fermeture à baïonnette.

11. Dispositif de fermeture selon la revendication 1, caractérisé en ce que la membrane (7) forme un espace conique, se rétrécissant du côté du couvercle et ouvert vers l'ouverture du récipient isolant.

12. Dispositif de fermeture selon la revendication 11, caractérisé en ce qu'il est prévu à la pointe (41) du cône de membrane (40) orientée vers le couvercle un élément de forme (42) qui peut être couplé avec un bras de levier (45) du levier d'actionnement (12) à deux bras.

13. Dispositif de fermeture selon la revendication 12, caractérisé en ce que la pointe du cône de membrane (40) comportant l'élément de forme (42) passe à travers une ouverture de la partie de base (21).

14. Dispositif de fermeture selon la revendication 12 ou 13, caractérisé en ce que l'élément de forme (42) se compose d'un goujon cylindrique (43) et d'un disque d'extrémité (44).

15. Dispositif de fermeture selon la revendication 14, caractérisé en ce que le bras de levier (45) du levier d'actionnement (12) présente une fourche (46) qui entoure de deux côtés le goujon circulaire (43) de l'élément de forme (42) et passe sous le disque d'extrémité (44) dont le diamètre est plus grand que celui du goujon (43).

16. Dispositif de fermeture selon l'une quelconque des revendications 12 à 15, caractérisé en ce que l'épaisseur de paroi du cône de membrane (40) augmente en direction de l'élément de forme (42).
